# EUROPEAN PATENT SPECIFICATION

(11) **EP 1 830 043 B1**
(45) Date of publication and mention of the grant of the patent: **27.01.2010**
(21) Application number: 06020586.1
(22) Date of filing: 29.09.2006
(51) Int. Cl.: F01N 3/28

(54) **Heat resistant sheet and exhaust gas cleaning apparatus**
Hitzebeständige Bahn und Abgasreinigungsanlage
Feuille résistante à la chaleur et dispositif de purification des gaz d'échappement

(30) Priority: 02.03.2006 JP 2006056705
(43) Date of publication of application: 05.09.2007
(60) Divisional application: 09012365.4
(73) Proprietor: IBIDEN CO., LTD., Ogaki-shi Gifu 503-8604 (JP)
(72) Inventor: Kariya, Satoru, Ogaki-shi Gifu 503-8559 (JP); Matsui, Hideki, Ogaki-shi Gifu 503-8559 (JP)
(74) Representative: HOFFMANN EITLE

(56) References cited:
- EP-A- 1 495 807
- EP-A1- 1 182 333
- WO-A-2004/064996
- WO-A-2005/021945
- WO-A-2005/110578

## Description

### BACKGROUND OF THE INVENTION

### 1. Field of the Invention

The present invention relates to a heat resistant sheet containing an inorganic fiber and an exhaust gas cleaning apparatus including such a heat resistant sheet.

### 2. Description of the Related Art

The number of automobiles is dramatically increasing in the present century and, in proportion to it, the amount of exhaust gas exhausted from the internal-combustion engines of automobiles is also rapidly increasing. Particularly, various kinds of substances contained in exhaust gas from a diesel engine causes pollution and therefore is seriously influencing the world environment at present.

Under the circumstances, conventionally, some kinds of exhaust gas cleaning apparatus have been suggested and have been put to practical use. A general exhaust gas cleaning apparatus is provided with a casing (a metal shell) in the middle of an exhaust gas pipe connected to a exhaust gas manifold of an engine, and is configured such that an exhaust gas processor having a large number of micropores is arranged therein. As one example of the exhaust gas processor, there are provided an exhaust gas filter such as a catalyst carrier and a diesel particulate filter (DPF). For example, in the case of a DPF, due to the structure described above, when exhaust gas passes through the exhaust gas processor, fine particles are trapped on a wall around the pore so that the fine particles can be eliminated from the exhaust gas. A component material of an exhaust gas processor is not only a metal and a metal alloy but also a ceramic, etc. As a representative example of an exhaust gas processor made of a ceramic, a honeycomb filter made of cordierite is known. Recently, a porous silicon carbide-based sintered object has been used as a material for an exhaust gas processor from the viewpoints of the heat resistance, mechanical strength, chemical stability, etc., thereof.

Commonly, a maintenance seal member is installed between such an exhaust gas processor and a metal shell. The maintenance seal member is used to prevent breakage caused by contact between an exhaust gas processor and a metal shell during driving of an automobile and to further prevent the exhaust gas from leaking through a gap between the metal shell and the exhaust gas processor. Also, the maintenance seal member has a role of preventing the exhaust gas processor from detaching caused by the exhaust pressure of exhaust gas. Furthermore, the exhaust gas processor is required to be kept at high temperature in order to maintain the reactivity thereof and, accordingly, a certain heat insulation property is required for the maintenance seal member. As a member satisfying these requirements, a heat resistant sheet composed of inorganic fibers such as alumina-based fibers is provided.

The heat resistant sheet is wound around at leas one portion of a peripheral surface of an exhaust gas processor except an aperture face thereof and fixed with the exhaust gas processor as one unit by taping, etc., so as to function as a maintenance seal member. Afterward, this united product is press-fitted into a metal shell so as to provide an exhaust gas cleaning apparatus.

Additionally, exhaust gas flowing through the inside of an exhaust gas cleaning apparatus tends to be at high temperature and high pressure with an increase in the power of an engine for automobile. When such high temperature and high pressure exhaust gas is introduced into an exhaust gas cleaning apparatus, the deterioration or degradation of a heat resistant heat which is caused by the heat of the exhaust gas, the scattering of inorganic fibers in a heat resistant heat which is caused by a wind pressure, and/or the wind erosion of a heat resistant sheet (a phenomenon such that a heat resistant sheet is broken by a wind pressure and the mass thereof is reduced) becomes remarkable.

When such deterioration or degradation of a heat resistant sheet occurs, there is a possibility such that the function of maintenance seal sheet as described above cannot be exerted. Also, it is required to suppress the scattering of inorganic fibers as much as possible in view of environmental problems. Further, there is a possibility such that fibers scattered from a heat resistant sheet by wind erosion cause the clogging of an exhaust gas processor. Moreover, if such wind erosion of a heat resistant sheet continues, the retention surface area of the heat resistant sheet to an exhaust gas processor is lowered, so that the effect of a maintenance seal member as described above cannot be exerted and there is provided a possibility of detaching of the exhaust gas processor, etc., by, for example, the lowering of maintenance power thereof.

Then, in order to avoid such a problem, a method for improving the heat resistance of a heat resistant sheet by optimizing the composition of inorganic fibers (for example, alumina: silica ratio) contained in the heat resistant sheet is suggested (see JP-A-2003-20938). Also, a method for suppressing the degree of wind erosion by providing an inorganic protecting material at the side edge part (edge surface which does not directly contact an exhaust gas processor or a metal shell but directly contacts exhaust gas) of a heat resistant sheet is suggested (see JP-A-7-80319).

However, in regard to a method for controlling the composition of inorganic fibers contained in a heat resistant sheet as disclosed in JP-A-2003-20938, a certain degree of the effect thereof is found with respect to the improvement of the stability of the fibers in a high temperature region but no significant effect can be obtained with respect to the wind erosion resistance thereof as long as alumina-based inorganic fibers are used. This is attributed to the fact that the degree of the wind erosion does not so correlate to the composition of the inorganic fibers. Therefore, the problem of the fiber scattering of the heat resistant sheet and the problem of the wind erosion thereof cannot be solved by this method.

Also, in regard to a method for providing an protecting material at the side edge part of a heat resistant sheet as disclosed in JP-A-7-80319, although the wind erosion of the heat resistant sheet is suppressed immediately after the begging of use thereof, if the protecting material is deteriorated or degraded by the heat or wind pressure of exhaust gas during use thereof, the effect thereof is lost, and, therefore, when an exhaust gas cleaning apparatus is continuously used over a realistic period of time, the problems described above still occur. Further, in order to provide the protecting material at the edge part of the maintenance seal member, it is necessary to newly provide such a process, and, therefore, there is a problem of providing a more complex process of manufacturing a maintenance seal member.

### SUMMARY OF THE INVENTION

According to one aspect of the present invention, there can be provided a heat resistant sheet with the technical features of claim 1.

According to another aspect of the present invention, there can be provided an exhaust gas cleaning apparatus comprising an exhaust gas processor, a maintenance seal member comprising a heat resistant sheet as described above which is wound around an least one portion of a peripheral surface of the exhaust gas processor except an aperture face thereof for use thereof, and a metal shell for accommodating the exhaust gas processor around which the maintenance seal member is wound.

### BRIEF DESCRIPTION OF THE DRAWINGS

FIG. 1 is a graph for comparing fiber length distributions of inorganic fibers contained in a heat resistant sheet before and after a wind erosion test.
FIG. 2 is a graph showing the reduction rate of each fiber length after the wind erosion test.
FIG. 3 is one example of the shape of a heat resistant sheet according to an embodiment of the present invention.
FIG. 4 is a conception diagram showing a condition such that a heat resistant sheet according to an embodiment of the present invention is used as a maintenance seal and assembled in a metal shell with an exhaust gas processor.
FIG. 5 is a diagram showing one example of the configuration of an exhaust gas cleaning apparatus according to an embodiment of the present invention.
FIG. 6 is a graph of the relationship between a GBD and a weight reduction rate after the erosion test in regard to four kinds of heat resistant sheets for which the content of fibers with a fiber length of 200 µm or less is changed.

### DETAILED DESCRIPTION OF THE PREFERRED EMBODIMENTS

Some embodiments of the present invention are made by tanking such a problem into consideration and the objects of the embodiments of the present invention are to provide a heat resistant sheet in which the scattering of a fiber is difficult to occur and which is excellent in the wind erosion resistance thereof without changing a method of manufacturing a conventional heat resistant sheet, and to provide an exhaust gas cleaning apparatus in which such a heat resistant sheet is used as a maintenance seal member.

In one embodiment of the present invention, there is provided a heat resistant sheet containing inorganic fibers, characterized in that among the inorganic fibers, a rate of a fiber(s) with a fiber length of 200 µm or less is 30-40%. As described below, most of an inorganic fiber(s) scattering from a heat resistant sheet at the time of being exposed to high temperature and high pressure gas such as exhaust gas is/are one(s) having a fiber length of approximately 200 µm or less. Therefore, the scattering of fiber(s) from a heat resistant sheet and further the wind erosion resistance of a heat resistant sheet can be improved by previously lowering the rate of a fiber(s) with a fiber length of approximately 200 µm or less contained in the heat resistant sheet.

Such a heat resistant sheet may be manufactured by a sheet making process. Also, the sheet making process is commonly called a wet-type process and, as so-called "papermaking", a processing method of manufacturing a heat resistant sheet through respective processes of mixing of fibers, stirring, fiber opening, slurrying, made paper forming, and compression drying. In this method, when a heat resistant sheet according to the embodiment of the present invention is manufactured, a manufacturing equipment and manufacturing method for a conventional heat resistant sheet can be directly utilized without providing an additional process, a manufacturing equipment, etc.

Also, such a heat resistant sheet may contain an inorganic binder. The adhesive force of fibers to each other can be enhanced by adding an inorganic binder into a heat resistant sheet, so that the scattering of a fiber(s) from the heat resistant sheet is further suppressed and the wind erosion of the heat resistant sheet is further improved. As an inorganic binder, there can be used silica sol, alumina sol, etc.

Also, the inorganic fiber may be a mixture of alumina and silica. Thereby, the heat insulation property of a sheet member is improved.

Furthermore, in another embodiment of the present invention, there is provided an exhaust gas cleaning apparatus which is composed of an exhaust gas processor, a maintenance seal member composed of the heat resistant sheet described above which is wound around at least one portion of an peripheral surface of the exhaust gas processor except an aperture face thereof for use thereof, and a metal shell for accommodating the exhaust gas processor around which the maintenance seal member is wound.

Herein, the exhaust gas processor may be a catalyst carrier or an exhaust gas filter.

Since the exhaust gas cleaning apparatus according to the embodiment of the present invention uses a heat resistant sheet having a good wind erosion resistance as a maintenance seal member, if high temperature and high pressure exhaust gas is introduced into the exhaust gas cleaning apparatus, the scattering of an inorganic fiber(s) from the maintenance seal member and further the wind erosion of the maintenance seal member are significantly suppressed and problems are difficult to occur such that the exhaust gas leaks or an exhaust gas processor detaches from a metal shell by the wind pressure of the exhaust gas, whereby the exchange time of the exhaust gas processor can be extended and the long life operation or high durability of the apparatus can be ensured.

An exhaust gas cleaning apparatus with less scattering of a fiber(s) and excellent in the wind erosion resistance thereof can be obtained by using a heat resistant sheet according to the embodiment of the present invention as a maintenance seal member for an exhaust gas cleaning apparatus.

Next, the best mode for implementing the present invention is described with reference to the drawings.

An embodiment of the present invention is a heat resistant sheet containing inorganic fibers, characterized in that among the inorganic fibers, the rate of a fiber(s) with a fiber length of 200 µm or less is 30-40%.

The inventors investigated the mechanism of scattering of inorganic fibers in a heat resistant sheet, which leads to the wind erosion of a maintenance seal member under the exposure thereof to high temperature and high pressure environment and found that most of scattering fibers belong to so-called "short fibers" with a fiber length of approximately 200 µm or less.

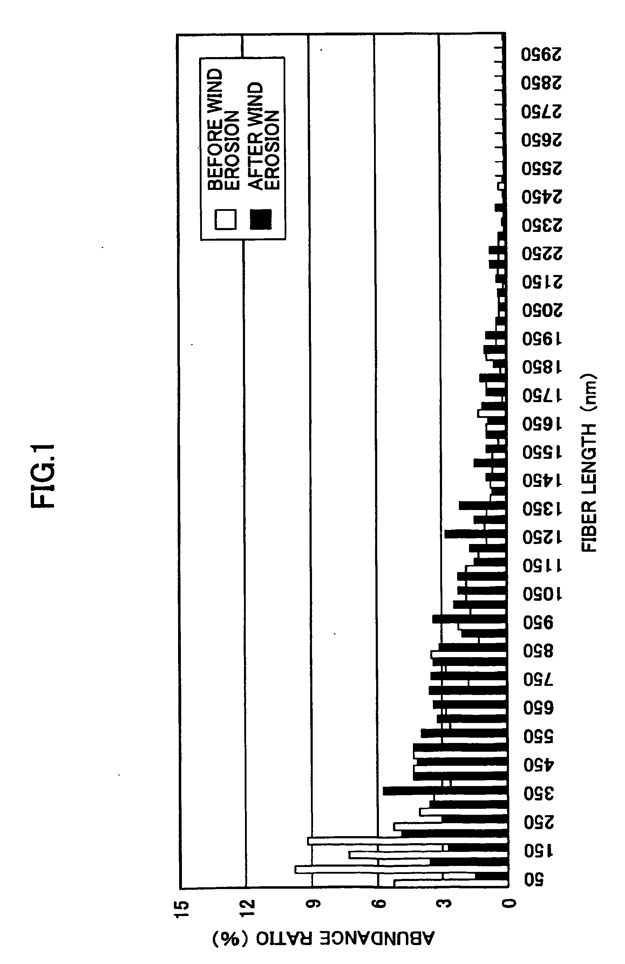

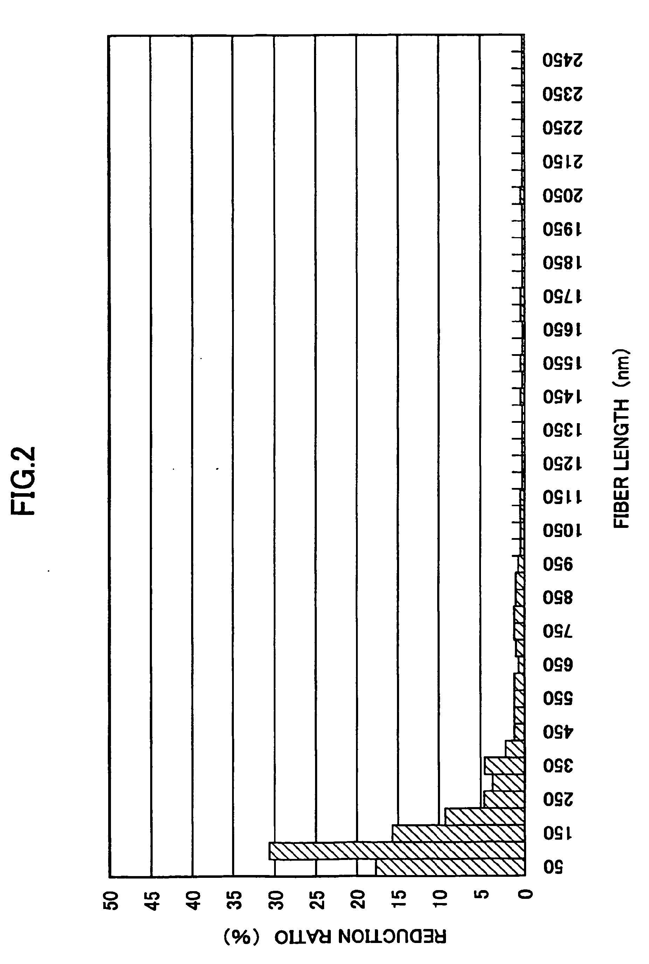

The results of a wind erosion test which support this mechanism are shown in FIG. 1 and FIG. 2. FIG. 1 shows the results of comparison of the fiber length distribution of inorganic fibers contained in a heat resistant sheet after a commercially available heating resistant sheet containing alumina and silica is used as a maintenance seal member of an exhaust gas cleaning apparatus and high temperature and high pressure gas for simulating exhaust gas is introduced into the exhaust gas cleaning apparatus (a wind erosion test) and a heat resistant sheet before being set to the exhaust gas cleaning apparatus. The wind erosion test was performed by introducing combustion gas into the exhaust gas cleaning apparatus for 3 hours. Herein, in the embodiment of the present invention, the fiber length distribution of inorganic fibers contained in a heat resistant sheet is defined as follows. First, 10 areas of a heat resistant sheet are randomly imaged with a magnification of 50 times by a SEM and the fiber length of each of approximately 100 fibers in each area is measured. Next, a fiber length distribution of the heat resistant sheet is obtained by integrating the results obtained in the all areas.

Also, FIG. 2 is a result showing a distribution with respect to the reduction degree of fibers belonging to each fiber length after the test. A reduction ratio (%) on the vertical axis of FIG. 2 shows the rate of the number of fibers belonging to each fiber length occupied in the total number of reduced fibers through the wind erosion test. From these figures, it can be understood that approximately 70 % or more of fibers scattered by wind erosion are ones having a fiber length of 200 µm or less.

Conventionally, it has been considered that most of the wind erosion of a maintenance seal member is caused by the breaking thereof when the maintenance seal member is attached to the inside of an exhaust gas processing apparatus or the scattering of inorganic fibers pulverized and miniaturized by the wind pressure of exhaust gas during use thereof. In this case, since the scattering of fibers caused by fine fibers generated at the time of handing a heat resistant sheet or in use thereof occurs, it is necessary to develop a new inorganic fiber which has a high strength and a high toughness and is difficult to be broken or pulverized, in order to suppress the wind erosion. However, in the test results, since the distribution of the length of an existing fiber except a "short fiber" scarcely change between before and after the test, it is considered that a fiber which is broken and miniaturized at the time of handling a maintenance seal member or during use thereof hardly exists and most of scattering fibers originate from "short fibers" which are originally contained in the heat resistant sheet. This result suggests that the scattering of inorganic fibers and further the wind erosion of a heat resistant sheet can be easily suppressed by previously reducing the content of "short fibers" contained in the heat resistant sheet. Based on such a mechanism of fiber scattering, the embodiment of the present invention is characterized in that a heat resistant sheet in which the rate of "short fibers", that is, fibers with a length of 200 µm or less is controlled to 30-40% is prepared, thereby improving the wind erosion resistance thereof. Such a heat resistant sheet according to the embodiment of the present invention has an advantage such that the manufacture thereof can be easily performed by directly utilizing a conventional process for manufacturing a heat resistant sheet.

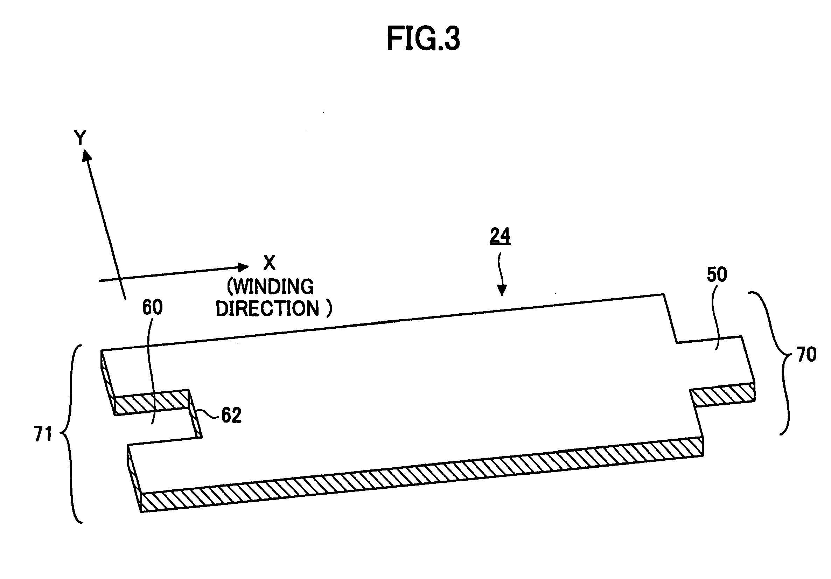

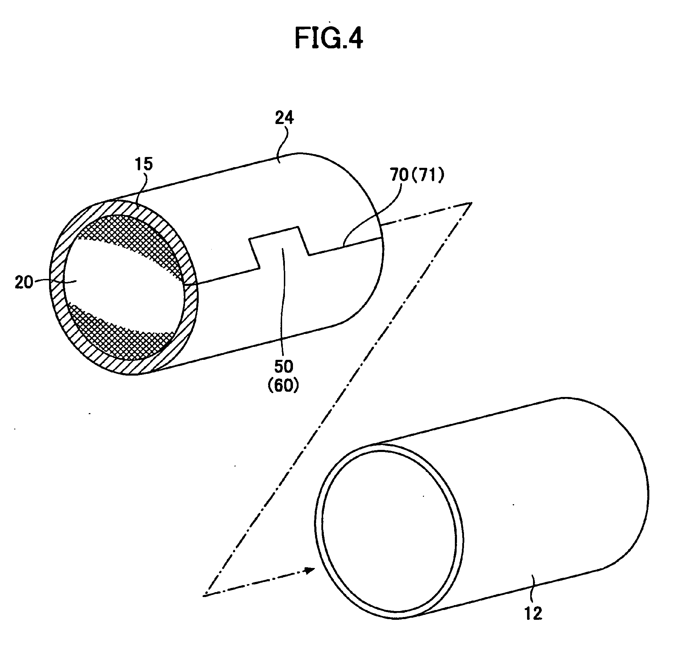

Thus manufactured heat resistant sheet can be utilized as, for example, a maintenance seal member wound around and fixed on the peripheral surface of an exhaust gas processor. One example of the shape of such a heat resistant sheet is shown in FIG. 3. Also, an exploded diagram of an exhaust gas processing device including the heat resistant sheet is shown in FIG. 4. However, a heat resistant sheet of the embodiment of the present invention is not limited to the shape of FIG. 3. In FIG. 3, a heat resistant sheet 24 has a pair of a fitting convex portion 50 and a fitting concave portion 60 on both end surfaces 70 and 71 perpendicular to a winding direction (X direction). When the heat resistant sheet 24 is wound around an exhaust gas processor 20, the fitting convex portion 50 is fitted to the fitting concave portion 60 and the heat resistant sheet 24 is fixed on the exhaust gas processor 20, as shown in FIG. 4. The exhaust gas processor 20 around which the heat resistant sheet 24 is wound as a maintenance seal member 15 is set inside a metal shell 12 by, for example, a press fitting method, as shown in FIG. 4.

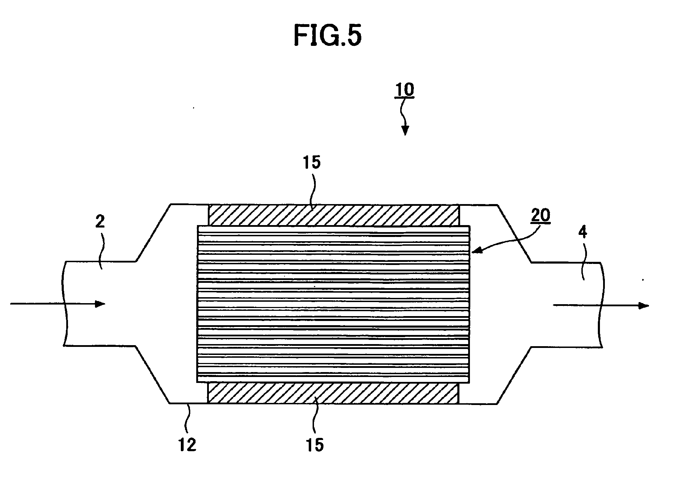

One example of the configuration of an exhaust gas cleaning apparatus 10 manufactured as described above is shown in FIG. 5. In the example of this figure, the exhaust gas processor 20 is a catalyst carrier having a number of through-holes in directions parallel to gas flow. The catalyst carrier is composed of, for example, a honeycomb-shaped porous silicon carbide, etc. Additionally, the exhaust gas cleaning apparatus 10 according to the embodiment of the present invention is not limited to such a configuration. For example, a DPF is allowed in which a part of through-holes, of the exhaust gas processor 20 is sealed. In such an exhaust gas cleaning apparatus, the wind erosion resistance of a maintenance seal member 15 can be improved due to the effect of a heat resistant sheet as described above.

One example of a method for manufacturing the heat resistant sheet 24 according to the embodiment of the present invention is described below.

The heat resistant sheet according to the embodiment of the present invention can be manufactured as follows.

First, predetermined quantities of an inorganic fiber material, inorganic binder and organic binder are added in water and mixing is performed. As an inorganic fiber material, for example, a bulk of raw stock of a fiber blend of alumina and silica is used. Additionally, a mixture of alumina and silica is used as an inorganic fiber in the following descriptions, but an inorganic fiber material is not limited to it and, for example, may be composed of only alumina or silica. However, from the viewpoint of the heat resistance thereof, it is preferable to use a fiber blend of alumina and silica as an inorganic fiber and particularly, it is preferable that the composition ratio of alumina to silica is approximately 70
- 79: 30 - 26. If the composition ratio of alumina is 60% or less, since the composition rate of mullite produced from alumina and silica becomes low, the heat conductivity of the heat resistant sheet 24 becomes high so that no sufficient heat insulation property may be obtained. Additionally, as an inorganic binder, for example, alumina sol or silica sol is used. Also, as an organic binder, latex, etc., is used.

Next, an obtained mixture is stirred in a mixer such as a paper machine so as to prepare fiber-opened slurry. The distribution of the fiber length of a subsequently obtained inorganic fiber can be controlled depending on time period for the stirring fiber-opening process and, for example, the quantity of fibers with a fiber length of 200 µm or less can be reduced by shortening the time period for the stirring fiber-opening process. Normally, the stirring fiber-opening process is performed for approximately 20 seconds - 120 seconds.

Subsequently, the obtained slurry is added into a molder and molded into a desired shape and further dewatering is performed, whereby a raw material mat of a heat resistant sheet can be obtained.

Further, this raw material mat is compressed by using a pressing machine, heated at a predetermined temperature and dried whereby a heat resistant sheet can be obtained. The compression process is performed such that the sheet density thereof after normal compression is approximately 0.10 g/cm³- 0.40 g/cm³. The heating and drying process is performed, for example, at temperature of 90 - 150 °C for approximately 5-60 minutes while the raw material mat is set in a heat treatment equipment such as an oven.

Thus manufactured heat resistant sheet is tailored so that the handling thereof is facilitated, and finally, cut into a predetermined shape and used. Additionally, before or after the tailoring, the following treatment may be further performed by using the obtained heat resistant sheet.

According to need, an organic binder such as a resin is impregnated in the tailored heat resistant sheet. Thereby, the bulk of the heat resistant sheet 24 can be controlled so as to improve the assembly of the heat resistant sheet 24 utilized as the maintenance seal member 15 of the exhaust gas processor 20 in the exhaust gas cleaning apparatus 10. Further, when high temperature exhaust gas is introduced into the exhaust gas cleaning apparatus 10, since the organic binder of the maintenance seal member 15 is lost, the compressed maintenance seal member 15 is restored, so that a small gap which can exist between a metal shell and the exhaust gas processor 20 is sealed and the maintenance power and sealing property of the maintenance seal member 15 are improved.

It is preferable that the content of the organic binder is in a range of 1.0 - 10.0 % by weight. In case of being less than 1.0 % by weight, no sufficient effect of improving the assembly may be obtained. Also, in case of being greater than 10.0 % by weight, no flexibility may be obtained so that it may be difficult to wind the heat resistant sheet 24 around the exhaust gas processor 20.

As an organic binder, it is preferable to use a resin, for example, acrylics (ACM), acrylonitrile-butadiene rubber (NBR), and styrene-butadiene rubber (SBR).

A resin is impregnated into the heat resistant sheet 24 by using an aqueous dispersion liquid prepared from such an organic binder and water and by means of spray-coating. Additionally, an excess impregnated solid content and water contained in the heat resistant sheet 24 are removed in the next process.

Next, the removal of an excess solid content and a drying process are performed. The removal of an excess solid content is performed by an aspiration method. Also, the removal of excess water is performed by a heating compression drying method. The drying is performed at temperature of approximately 95-155 °C. If the temperature is lower than 95 °C, the drying time may be longer and the production efficiency may be lowered. Also, if the drying temperature is higher than 155 °C, the decomposition of the organic binder itself may be initiated and the adhesive property of the organic binder may be lost.

Additionally, in the example described above, a method for manufacturing a heat resistant sheet according to the embodiment of the present invention by a paper making process is described. However, a method of manufacturing a heat resistant sheet according to the embodiment of the present invention is not limited to it and it is obvious for a person skilled in the art that the heat resistant sheet may be manufactured by, for example, a dry process in which a blowing process and needling process are combined. The blowing process is a method such that fiber spinning is conducted by an air flow spurted from an air nozzle and a fiber-spinning liquid flow which is jetted from a nozzle for feeding the fiber-spinning liquid and contains a precursor of an organic fiber. Subsequently, the fiber-spun fiber precursor is laminated and further sheeting is conducted by a process such that fibers are confounded by inserting and removing many needles (needling process). However, in the paper making process described above, the manufacturing process is simple compared to other methods and a big production apparatus is not needed, which is more preferable as a method of manufacturing a heat resistant sheet according to the embodiment of the present invention.

Such a heat resistant sheet 24 is used as a maintenance seal member 15 so as to provide the exhaust gas cleaning apparatus 10, whereby the exhaust gas processing apparatus 10 excellent in the wind erosion resistance thereof can be obtained.

The effect of a practical example of the embodiment of the present invention is described below.

### [Practical example]

In order to verify the effect of the embodiment of the present invention, a wind erosion test was performed by using a heat resistant sheet according to the embodiment of the present invention. The heat resistant sheet was manufactured by the following procedures.

### [Manufacture of heat resistant sheet]

### (Sample 1)

300 g of a raw stock bulk of alumina fibers (mufftex) of Mitsubishi Chemical Corporation, 15 g of an organic binder (latex), 3 g of an inorganic binder (alumina sol) and water were added and mixed so that the concentration of fibers in the raw material liquid was 0.5 wt%. Next, the liquid was stirred by a paper machine for 20 seconds for fiber opening. The fiber-opened raw material liquid was transferred to a molder with 335 x 335 x 400 mm and water content thereof was separated and removed through a mesh set on the bottom face of the molder, whereby a water-containing sheet of alumina fibers was obtained. Next, after the water-containing sheet was previously compressed, the obtained raw material mat was substantially uniformly compressed with a predetermined pressing force in order to change the apparent density of the sheet (referred to as a gap bulk density GBD, below: GBD = mass of sheet / surface area of sheet / thickness of sheet), thereby making heat resistant sheets with various GBDs in a range of 0.2 - 0.5 g/cm³.

Further, each of these heat resistant sheets with various GBDs was cut into a sheet piece with a size of 25 mm x 25 mm, which was subjected to the following test. Thus manufactured and cut sheet piece is called sample 1.

Next, the distribution of fiber length of an inorganic fiber contained in the sample 1 was measured. The fiber distribution of fiber length was measured as follows. First, 10 areas on a sheet with each GBD were randomly imaged with a magnification of 50 times by a SEM and the length of approximately 100 fibers was measured in each area. Next, the results in regard to all the areas which were obtained by the measurement were averaged to obtain the distribution of the fiber length. From the results of the measurement, the rate of fibers with a length of 200 µm or less which were contained in the sample 1 was approximately 30 % independently of the value of the GBD.

### (Sample 2, 3 and 4)

Respective sheets with various GBDs were manufactured by a method similar to the sample 1 except that the fiber-opening time period in the paper machine was extended to 30 seconds. These are referred to as sample 2. Also, sheets of sample 3 were manufactured by the previously described method similar to the sample 1, except that the fiber-opening time period in the paper machine was extended to 60 seconds. Further, sheets of sample 4 were manufactured by the previously described method similar to the sample 1, except that fiber-opening time period in the paper machine was extended to 120 seconds. Among inorganic fibers contained in these samples 2, 3 and 4, the rates of fibers with a length of 200 µm or less were approximately 33 %, 40 %, and 52 %, respectively. Also, these rates were constant independently of the GBDs in respective samples.

### [Evaluation of wind erosion resistance of heat resistant sheet]

A wind erosion test was performed by using respective samples 1 - 4 manufactured as described above. Herein, the degree of wind erosion was evaluated for a certain time period by exposing each sample to air with a constant pressure emitted from a nozzle and measuring the change in the weight of the sample before and after the exposure. Each sample was separated by 3.61 mm from the tip of an air nozzle adjusted to feed air in approximately horizontal directions and set such that both main surfaces of the sheet which were perpendicular to the directions of the thickness of the sample were substantially parallel to the direction of air feeding.

Test air pressure was 135 kPa for the sample 1 and 90 kPa for the samples 2-4. The operation rate was 20 times/min and after the sample was exposed for 3 hours and the reduction of the weight thereof was measured. Such a test was performed for each sample 1 - 4 with various GBDs and a GBD at which the reduction of the weight thereof rapidly increases was referred to as wind erosion initiating BGD for each sample.

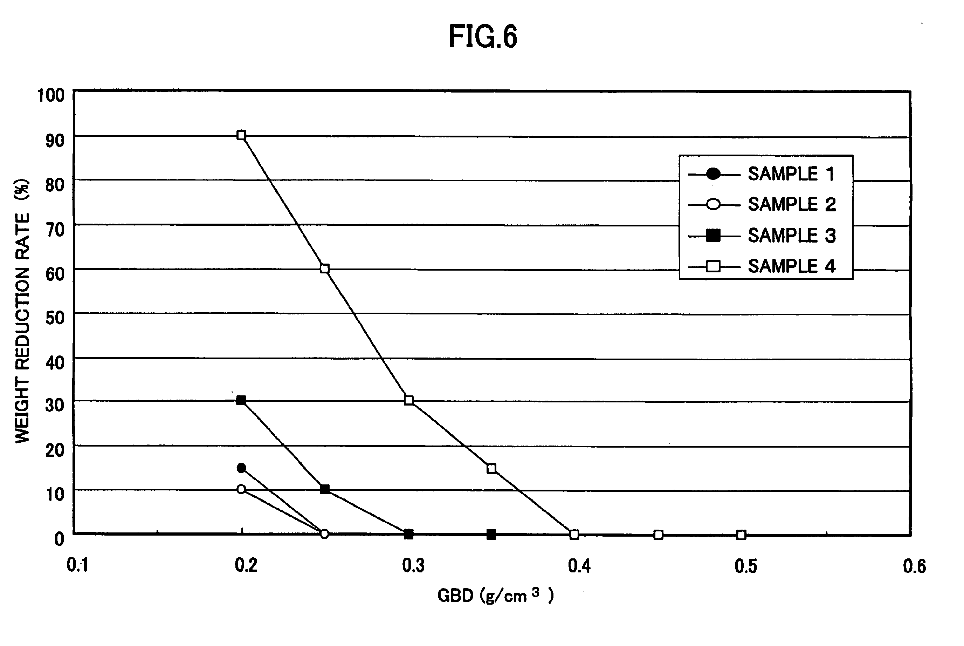

The test results are shown in FIG. 6. The figure shows the reduction rate of the weight of a sheet having each GBD (that is, the ratio of the scattering weight to the weight of a sheet before the test (x 100)) for each of samples 1-4. From this figure, for example, the wind erosion initiating GBD of the sample 1 was determined to 0.25 g/cm³. The results of the wind erosion initiating GBD obtained for each sample are shown in Table 1.

**Table 1**

| | Content of fibers with a fiber length of 200 µm or less (%) | Test pressure (kPa) | Wind erosion initiating GBD (g/cm³) |
|---|---|---|---|
| Sample 1 | 30 | 135 | 0.25 |
| Sample 2 | 33 | 90 | 0.22 |
| Sample 3 | 40 | 90 | 0.30 |
| Sample 4 | 52 | 90 | 0.39 |

From Table 1, it can be found that the wind erosion initiating GBDs were sufficiently low, such as approximately 0.2 - 0.3 g/cm³, for the samples 1 - 3 in which the quantity of fibers with a fiber length of 200 µm or less was suppressed to 30 - 40 %. Particularly, for the sample 1 in which the quantity of fibers with a fiber length of 200 µm or less was suppressed to 30 %, the wind erosion initiating GBD thereof was sufficiently low even though the test pressure was higher (135 kPa) compared to other samples. On the other hand, in the case of the sample 4, the wind erosion initiating GBD was a comparatively high value, such as 0.39 g/cm³.

The GBD of a heat resistant sheet used as a maintenance seal member of a common exhaust gas cleaning apparatus after press-fitting thereof is estimated to be approximately 0.3 g/cm³. Therefore, it is found that as this GBD is regarded as a value of a heat resistant sheet under the standard environment, the heat resistant sheets of samples 1 - 3 do not show significant wind erosion even in the standard use environment but shows a good wind erosion resistance. As described above, this is attributed to the fact that the quantity of inorganic fibers with a fiber length of 200 µm or less, that is, "short fibers", contained in the heat resistant sheet was reduced, and the effect of the embodiment of the present invention was confirmed.

A heat resistant sheet and exhaust gas cleaning apparatus according to the embodiment of the present invention can be utilized for an exhaust gas cleaning apparatus for vehicle, etc.

Further, the present invention is not limited to these embodiments, but various variations and modifications may be made within the scope of the present invention is claimed.

## Claims

1. A heat resistant sheet (24) for an exhaust gas cleaning apparatus (10) containing inorganic fibers, **characterized in that** among the inorganic fibers, a rate of a fiber(s) with a fiber length of 200 µm or less is 30-40%.

2. The heat resistant sheet (24) as claimed in claim 1, **characterized by** being manufactured by a sheet making method.

3. The heat resistant sheet (24) as claimed in claim 1 or 2, **characterized by** containing an inorganic binder.

4. The heat resistant sheet (24) as claimed in any of claims 1 to 3, **characterized in that** the inorganic fiber is a mixture of alumina and silica.

5. An exhaust gas cleaning apparatus (10) comprising
an exhaust gas processor (20),
a maintenance seal member (15) comprising a heat resistant sheet (24) as claimed in any of claims 1 to 4 which is wound around at least one portion of a peripheral surface of the exhaust gas processor (20) except an aperture face thereof for use thereof, and
a metal shell (12) four accommodating the exhaust gas processor (20) around which the maintenance seal member (15) is wound.

6. The exhaust gas cleaning apparatus (10) as claimed in claim 5, **characterized in that** the exhaust gas processor (20) is a catalyst carrier or an exhaust gas filter.

## Patentansprüche

1. Hitzebeständige Lage (24) für eine Abgasreinigungsvorrichtung (10), die anorganische Fasern enthält, **dadurch gekennzeichnet, dass** unter den anorganischen Fasern eine Faseranteil mit einer Faserlänge von 200 µm oder weniger 30-40 % beträgt.

2. Hitzebeständige Lage (24) nach Anspruch 1, **dadurch gekennzeichnet, dass** diese mittels eines Lagenherstellungsverfahrens hergestellt wird.

3. Hitzebeständige Lage (24) nach Anspruch 1 oder 2, **dadurch gekennzeichnet, dass** diese ein anorganisches Bindemittel enthält.

4. Hitzebeständige Lage (24) nach einem der Ansprüche 1 bis 3, **dadurch gekennzeichnet, dass** die anorganische Faser eine Mischung aus Aluminiumoxid und Silica ist.

5. Abgasreinigungsvorrichtung (10), umfassend
einen Abgasprozessor (20),
ein Erhaltungsdichtungselement (15), das eine Hitzebeständige Lage (24) nach einem der Ansprüche 1 bis 4 umfasst, die um wenigstens einen Abschnitt einer Umfangsoberfläche des Abgasprozessors (20) mit Ausnahme einer Öffnungsfläche davon zur Verwendung davon gewickelt ist, und
eine Metalllage (12) zum Aufnehmen des Abgasprozessors (20), um den das Erhaltungsdichtungselement (15) gewickelt ist.

6. Abgasreinigungsvorrichtung (10) nach Anspruch 5, **dadurch gekennzeichnet, dass** der Abgasprozessors (20) ein Katalysatorträger oder ein Abgasfilter ist.

## Revendications

1. Feuille résistante à la chaleur (24) pour un dispositif de purification de gaz d'échappement (10) contenant des fibres inorganiques, **caractérisée en ce que** parmi les fibres inorganiques, un taux d'une (de) fibre(s) ayant une longueur de fibre de 200 µm ou moins est de 30 à 40 %.

2. Feuille résistante à la chaleur (24) selon la revendication 1, **caractérisée en ce qu'**elle est fabriquée par un procédé de fabrication de feuille.

3. Feuille résistante à la chaleur (24) selon la revendication 1 ou 2, **caractérisée en ce qu'**elle contient un liant inorganique.

4. Feuille résistante à la chaleur (24) selon l'une quelconque des revendications 1 à 3, **caractérisée en ce que** la fibre inorganique est un mélange d'alumine et de silice.

5. Dispositif de purification de gaz d'échappement (10) comprenant
un dispositif de traitement de gaz d'échappement (20),
un élément de joint de maintenance (15) comprenant une feuille résistante à la chaleur (24) selon l'une quelconque des revendications 1 à 4 qui est enroulée autour d'au moins une partie d'une surface périphérique du dispositif de traitement de gaz d'échappement (20) à l'exception d'une face d'ouverture de celui-ci pour son utilisation, et
une enveloppe métallique (12) pour loger le dispositif de traitement de gaz d'échappement (20) autour duquel est enroulé l'élément de joint de maintenance (15).

6. Dispositif de purification de gaz d'échappement (10) selon la revendication 5, **caractérisé en ce que** le dispositif de traitement de gaz d'échappement (20) est un support catalytique ou un filtre de gaz d'échappement.
